# EUROPÄISCHE PATENTSCHRIFT

(11) **EP 3 767 082 B1**
(45) Veröffentlichungstag und Bekanntmachung des Hinweises auf die Patenterteilung: **04.10.2023**
(21) Anmeldenummer: 20000198.0
(22) Anmeldetag: 29.05.2020
(51) Int. Cl.: F01L 1/08, F01L 13/00

(54) **NOCKEN FÜR EINE NOCKENWELLE**
CAM FOR A CAMSHAFT
CAMES POUR ARBRE À CAMES

(30) Priorität: 18.07.2019 DE 102019005036
(43) Veröffentlichungstag der Anmeldung: 20.01.2021
(73) Patentinhaber: Neumayer Tekfor Engineering GmbH, 77756 Hausach (DE)
(72) Erfinder: Schöner, Daniel, 77784 Oberharmersbach (DE)

(56) Entgegenhaltungen:
- EP-A1- 2 725 208
- DE-A1- 2 436 667
- DE-A1-102011 109 764
- DE-A1-102017 214 728
- US-B2- 6 978 749

## Beschreibung

Die vorliegende Erfindung betrifft einen Nocken mit den Merkmalen des Oberbegriffs des ersten Anspruchs für eine Nockenwelle, wie sie insbesondere in einem Verbrennungsmotor zur Anwendung kommt.

Nockenwellen in Verbrennungsmotoren dienen dem Öffnen und Schließen der einzelnen Ventile und damit dem Steuern des Motors. Für diesen Zweck haben die Nocken jeweils eine Außenkontur als Lauffläche, die in Kontakt mit einem sog. Schlepphebel gebracht wird. Um unterschiedliche Varianten des Steuerverhaltens zu ermöglichen, ist es im Stand der Technik bekannt, Nockenwellen zu verwenden, auf denen Nocken mit unterschiedlichen Laufflächen den einzelnen Schlepphebeln zugeordnet sind. Das Verstellen ereignet sich durch das axiale Verschieben der Nockenwellen, sodass jeweils andere Nocken in Eingriff mit den Schlepphebeln kommen. Die dafür vorgesehenen Mehrfachnocken verfügen über zumindest zwei Teilnocken. Für das Verschieben verfügen die Teilnocken über eine gemeinsame Grundkreisphase. Ein solcher Mehrfachnocken lässt sich beispielsweise der DE 10 2011 109 764 A1 oder der DE 10 2017 214 728 A1 entnehmen. Einen gattungsgemäßen Nocken beschreibt insbesondere die DE 10 2011 109 764 A1.

In der WO 2005/090756 A1 wird ein gebauter Mehrfachnocken beschrieben, der aus einzelnen Komponenten zusammengesetzt ist. Eine spanabhebende Herstellung eines einteiligen Mehrfachnockens offenbart die DE 40 17 239 C2. Ein Werkzeug zum Erzeugen eines Mehrfachnockens zeigt die DE 10 2009 022 086 A1.

Für die Herstellung eines Mehrfachnockens ist es beispielsweise bekannt, durch Warmpressen einen Rohling zu erzeugen und durch eine zerspanende Bearbeitung die Teilnocken sowie einen Freistich zwischen den Teilnocken zu erhalten. Der in der Regel kreisrunde Freistich dient dazu, die Teilnocken einem Schleifvorgang zu unterziehen, wobei die Schleifscheibe ins "Freie" läuft, also keinen Kontakt der Berandung mit dem Nocken haben soll. Schließlich werden üblicherweise die geschliffenen Bereiche entgratet.

Die Aufgabe der Erfindung besteht darin, einen Nocken vorzuschlagen, der eine effektivere Herstellung ermöglicht und der sich durch bessere Eigenschaften als die Nocken im Stand der Technik auszeichnet.

Die Aufgabe löst die Erfindung durch einen Nocken mit den Merkmalen des ersten Anspruchs.

Bei dem erfindungsgemäßen Nocken sind mindestens zwei Teilnocken vorgesehen, die jeweils über eine Laufflächen-Kontur verfügen und die entlang einer Längsachse der Nocke hintereinander angeordnet sind. Die Laufflächen-Kontur ist dabei der radiale Verlauf der Außenfläche der Teilnocken, wobei die radiale Richtung senkrecht auf der Längsachse steht. Die Laufflächen-Konturen beschreiben also den radialen Verlauf der Außenflächen der Teilnocken um die Längsachse herum.

Zwischen den zwei Teilnocken befindet sich ein Freistich. Der Freistich ist dabei eine Vertiefung in Richtung der Längsachse im Gegensatz zu den Teilnocken als Definition von Erhöhungen fort von der Längsachse. Zudem ist der Freistich auch ein Hinterschnitt relativ zu den benachbarten Seiten der Teilnocken. Der Freistich verfügt zum einen über ein Profil und zum anderen über eine Kontur. Das Profil ist der Verlauf entlang der Längsachse und ist also das Aussehen des Freistichs, wenn der Bereich des Nockens herum um den Freistich von der Seite und somit senkrecht zur Längsachse betrachtet wird. Das Profil des Freistichs ist durch eine Vertiefung und den Verlauf der Seitenflanken dazu gekennzeichnet. Die Kontur wiederum beschreibt den Verlauf des Freistichs radial um die Längsachse herum. Unter "Freistich" sei dabei generell eine Ausnehmung im Nocken verstanden, die z. B. auch umformtechnisch erzeugt sein kann und die vorgenannte Form in Bezug auf Kontur und Profil aufweist.

Ein Schnitt entlang der Längsachse durch den Nocken zeigt somit - ober- und unterhalb der Längsachse - die jeweiligen (Teilnocken-)Profile der Teilnocken und dazwischen das Profil des Freistichs. In einer Ausgestaltung verläuft zumindest ein Profil eines Teilnockens parallel zur Längsachse. Die Kontur des Freistichs bzw. die Teilnocken-Konturen zeigen sich bei Schnitten entlang den zugeordneten Höhen der Längsachse.

Bei dem erfindungsgemäßen Nocken ist vorgesehen, dass die Kontur des Freistichs variabel und insbesondere nicht konstant ist. Die Kontur beschreibt somit vor allem keinen kreisförmigen Freistich.

Es hat sich ergeben, dass sich der Nocken durch eine höhere Stabilität als im Stand der Technik auszeichnet. Wird der Nocken umformtechnisch erzeugt, so reduzieren sich zusätzlich Kontakt- bzw. Biegespannungen im Umformwerkzeug. Dies erhöht beispielweise die Standzeit des Werkzeugs. Ein weiterer Vorteil bei dieser Herstellungsart und bei der besonderen Ausprägung des Nockens ist, dass sich ein höherer Füllgrad bei geringerer Presskraft als im Stand der Technik einstellt.

Die Laufflächen-Konturen der mindestens zwei Teilnocken unterscheiden sich voneinander. Die Teilnocken erzeugen bedingt durch ihre Laufflächen-Konturen unterschiedliche Schließverhalten der zugeordneten Zylinder und sorgen somit für einen jeweils eigenen Betrieb des zugeordneten Zylinders.

In einer Ausgestaltung verfügt der Nocken über drei Teilnocken, zwischen denen sich zwei Freistiche befinden. Daher gelten die diskutierten Ausgestaltungen jeweils auch für eine Kombination aus zwei benachbarten Teilnocken und dem jeweils dazwischen angeordneten Freistich.

Die Kontur des Freistichs ist erfindungsgemäß abhängig von den Laufflächen-Konturen. Der radiale Verlauf des Profils des Freistichs ist vom radialen Verlauf der Teilnocken abhängig. Die Teilnocken sind insbesondere die Teilnocken, die zum Freistich unmittelbar benachbart sind, ihn also seitlich flankieren.

Die Abhängigkeit der Kontur des Freistichs von den Laufflächen-Konturen wird erfindungsgemäß durch eine Projektion der Teilnocken bewirkt, wobei die Kontur jeweils dem Teilnocken folgt, welcher den geringsten Abstand zur Längsachse aufweist, welcher sich also radial am wenigsten nach außen erstreckt.

Erfindungsgemäß ist die Kontur jeweils abhängig von derjenigen Laufflächen-Kontur, die einen geringeren radialen Abstand zur Längsachse als die andere Laufflächen-Kontur aufweist. Die Kontur des Freistichs folgt jeweils derjenigen Laufflächen-Kontur der zwei Laufflächen-Konturen, die sich durch den jeweils geringsten Abstand zur Längsachse auszeichnet. Wenn beide Laufflächen-Konturen in einem Bereich den gleichen Abstand zur Längsachse aufweisen - z. B. in einem Grundkreis - so folgt die Kontur des Freistichs beiden Laufflächen-Konturen.

Eine Ausgestaltung sieht vor, dass an Bereichen der Kontur, an welchen ein Wechsel der Abhängigkeit von einer zu einer anderen Laufflächen-Kontur stattfindet, ein tangentialer Übergang vorhanden ist. Alternativ könnte ein Wechsel zwischen den Bereichen durch einen geraden Abschnitt mit verrundeten Ecken stattfinden.

Eine Ausgestaltung besteht darin, dass das Profil entlang der Kontur konstant ist. In dieser Ausgestaltung ist das Profil radial umlaufend jeweils das gleiche und bei jedem Schnitt durch den Nocken zeigt sich das gleiche Profil des Freistichs. Da sich die Kontur ändert, liegt das gleiche Profil jedoch z. B. unterschiedlich weit von der Längsachse entfernt.

Eine alternative Ausgestaltung besteht darin, dass das Profil entlang der Kontur variabel ist. Somit hat in dieser Ausgestaltung der Freistich ein variables Profil und eine variable Kontur. Dies bedeutet, dass die Form des Freistichs sich entlang der Längsachse und auch radial umlaufend um die Längsachse verändert.

Eine Ausgestaltung sieht vor, dass das Profil eine Symmetrieachse aufweist, die senkrecht auf der Kontur steht.

Eine Ausgestaltung sieht vor, dass eine Tiefe als jeweils geringster Abstand zur Längsachse des Profils entlang der Kontur konstant ist. In dieser Ausgestaltung ist der Bereich des Profils, der den geringsten Abstand zur Längsachse aufweist, jeweils im gleichen Abstand zur Längsachse. Dies ist dabei unabhängig davon, ob sich die Form des Profils ändert oder gleich bleibt.

Eine alternative Ausgestaltung sieht vor, dass eine Tiefe als jeweils geringster Abstand zur Längsachse des Profils entlang der Kontur variabel ist. In dieser Ausgestaltung hat der jeweils tiefste Bereich des Profils jeweils einen unterschiedlichen Abstand zur Längsachse. Somit ist dieser tiefste Bereich teilweise näher benachbart zur oder weiter entfernt von der Längsachse angeordnet. Das Maß des Abstands ist in einer Ausgestaltung durch die Kontur bedingt.

In einer Ausgestaltung ergibt sich der Freistich dadurch, dass bei der Herstellung des Nockens radial umlaufend jeweils im Wesentlichen die gleiche Materialmenge abgetragen bzw. umformtechnisch verdrängt wird.

Eine Ausgestaltung besteht darin, dass die Teilnocken und der Freistich unter Verwendung einer Umformtechnik erzeugt sind. Bei der Umformtechnik handelt es sich vorzugsweise um eine Form des Schmiedens, z. B. Warmpressen.

Eine Ausgestaltung sieht vor, dass die Teilnocken umformtechnisch erzeugte Verrundungen hin zu ihren jeweiligen Seitenflächen aufweisen. Durch das umformtechnische Herstellen ist insbesondere kein Entgraten erforderlich und lassen sich hier auch direkt Verrundungen (oder Abrundungen) an den Übergängen der Laufflächen der Teilnocken zu den Seitenflächen erzeugen.

Die Erfindung bezieht sich auch auf ein Verfahren zum Herstellen eines Nockens, wobei mindestens zwei Teilnocken und ein dazwischen befindlicher Freistich umformtechnisch erzeugt werden. Die oben und im Folgenden diskutierten Ausgestaltungen des Nockens beziehen sich dabei entsprechend auch auf das passende Herstellungsverfahren. Daher wird auf eine Wiederholung verzichtet.

Für die Herstellung wird in einer Ausgestaltung ein Schließwerkzeug verwendet, wie es beispielsweise in der bereits genannten DE 10 2009 022 086 A1 beschrieben ist.

In einer Ausgestaltung werden die Laufflächen des Nockens geschliffen.

Im Einzelnen gibt es eine Vielzahl von Möglichkeiten, den erfindungsgemäßen Nocken auszugestalten und weiterzubilden. Dazu wird verwiesen einerseits auf die dem unabhängigen Patentanspruch nachgeordneten Patentansprüche, andererseits auf die folgende Beschreibung von Ausführungsbeispielen in Verbindung mit der Zeichnung. Es zeigen:
- Fig. 1: eine räumliche Darstellung eines Mehrfachnocken,
- Fig. 2: eine seitliche Darstellung des Nockens der Fig. 1,
- Fig. 3: einen Schnitt durch den Nocken der Fig. 1 entlang der Längsachse,
- Fig. 4: eine Sicht auf eine Stirnseite des Nockens der Fig. 1,
- Fig. 5: einen Schnitt durch den Nocken der Fig. 1 senkrecht zur Längsachse und
- Fig. 6: eine schematische Darstellung der Abhängigkeit der Kontur des Freistichs.

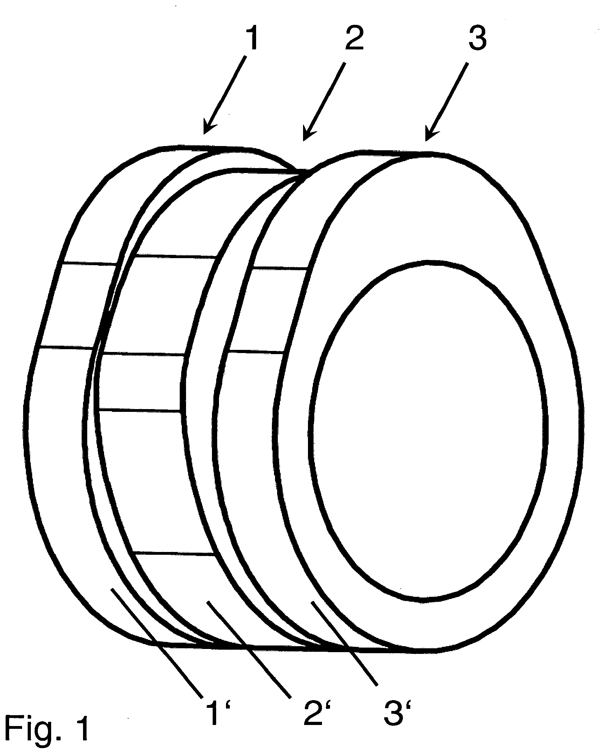

Die Fig. 1 zeigt einen Mehrfachnocken, der drei Teilnocken 1, 2, 3 aufweist. Die Teilnocken 1, 2, 3 haben jeweils eine Lauffläche 1', 2', 3', mit der sie im eingebauten Zustand in Kontakt mit einem Schlepphebel kommen. Die unterschiedlichen radialen Verläufe der Laufflächen 1', 2', 3' - also die variablen Laufflächen-Konturen - erlauben dadurch unterschiedliche Schaltverhalten des zugeordneten Zylinders des Verbrennungsmotors.

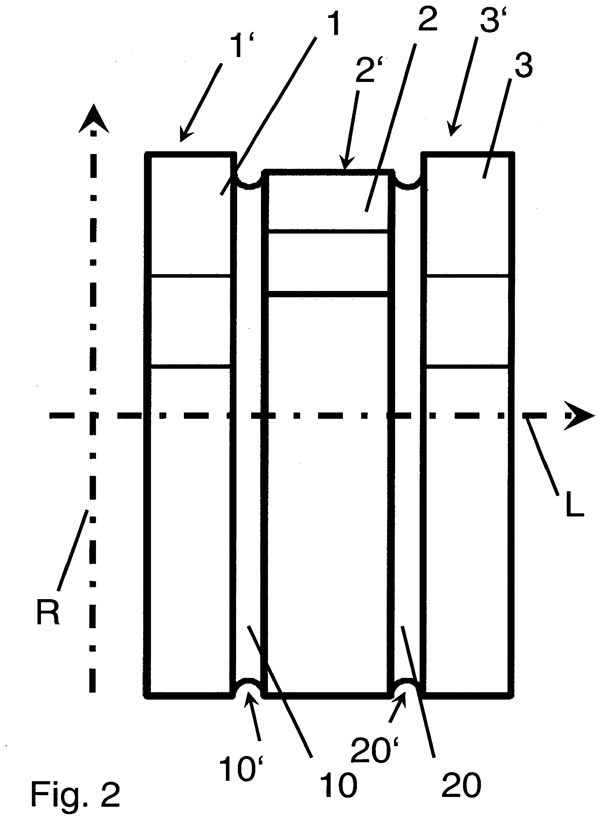

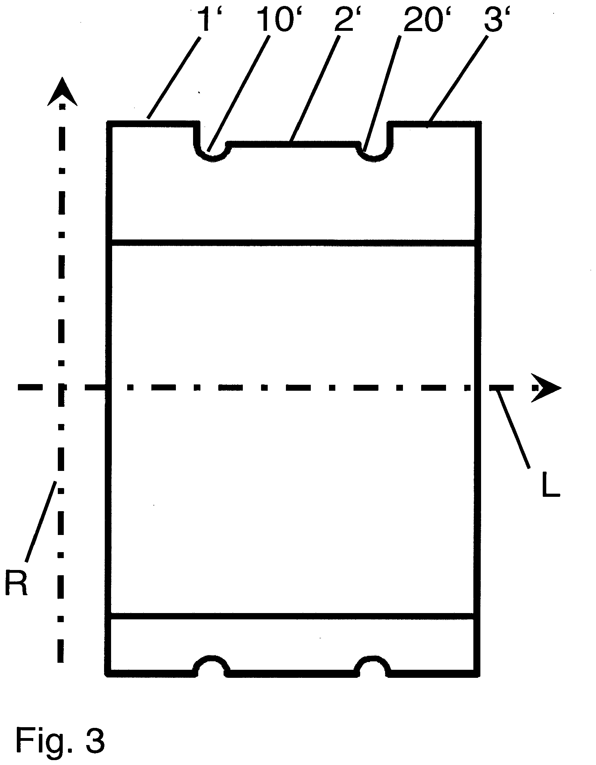

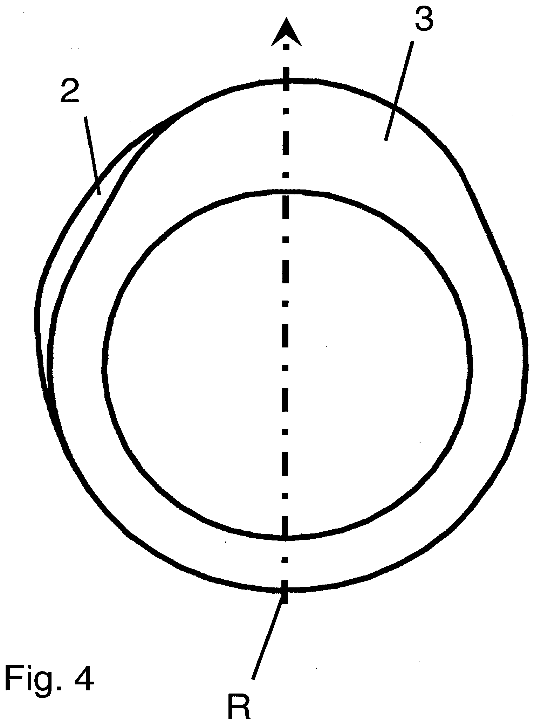

Die Fig. 2 zeigt den Nocken der Fig. 1 in der seitlichen Sicht und die Fig. 3 zeigt einen Schnitt entlang der Längsachse L. Die Fig. 4 stellt einen Blick auf eine Stirnseite des Nockens dar. Im Folgenden werden die Abbildungen Fig. 2, 3 und 4 gemeinsam besprochen.

Zu erkennen ist (siehe Fig. 2), wie die drei Teilnocken 1, 2, 3 sich entlang der Längsachse L hintereinander befinden. Zwischen jeweils zwei Teilnocken 1, 2 bzw. 2, 3 befindet sich ein Freistich 10, 20.

Die seitliche Darstellung (siehe Fig. 2) sowie der Schnitt (siehe Fig. 3) erlauben den Blick auf die Profile der Teilnocken 1, 2, 3 sowie die Profile 10', 20' der Freistiche 10, 20. Die Profile beschreiben den Verlauf entlang der Längsachse L.

Die Profile der Teilnocken 1, 2, 3 sind hier jeweils ein konstanter Verlauf parallel zur Längsachse L. Die Profile 10', 20' der Freistiche 10, 20 sind jeweils durch eine im Wesentlichen symmetrische Form gekennzeichnet. Es gibt einen Tiefpunkt, der durch den geringsten Abstand zur Längsachse L gegeben ist, und seitlich dazu die nach außen verlaufenden Flanken, die sich als Hinterschnitte zu den benachbarten Teilnocken 1, 2, 3 erheben.

Die Konturen (siehe Fig. 4) wiederum definieren den Verlauf in radialer Richtung R um die Längsachse L herum. Zu erkennen ist, wie der Teilnocken 3 sich mit seiner äußeren Lauffläche radial unterschiedlich weit nach außen erstreckt und wie der mittlere Teilnocken 2 ihn in einem Bereich (hier links zu sehen) radial überragt.

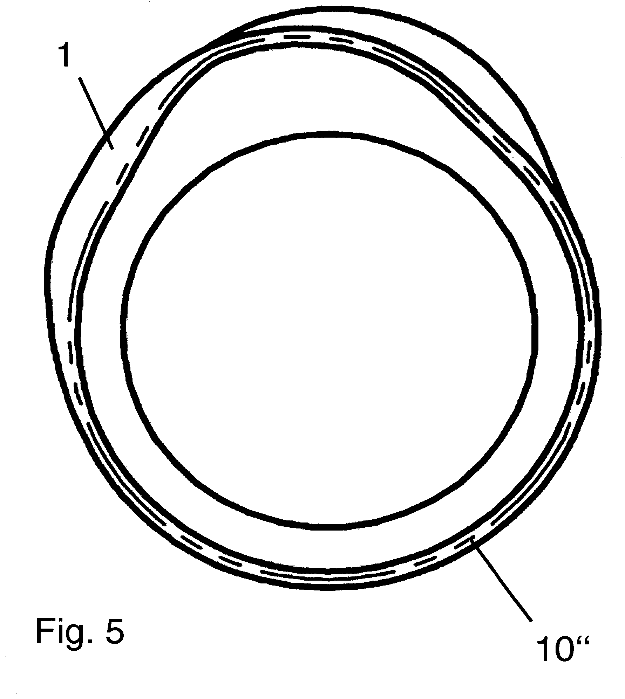

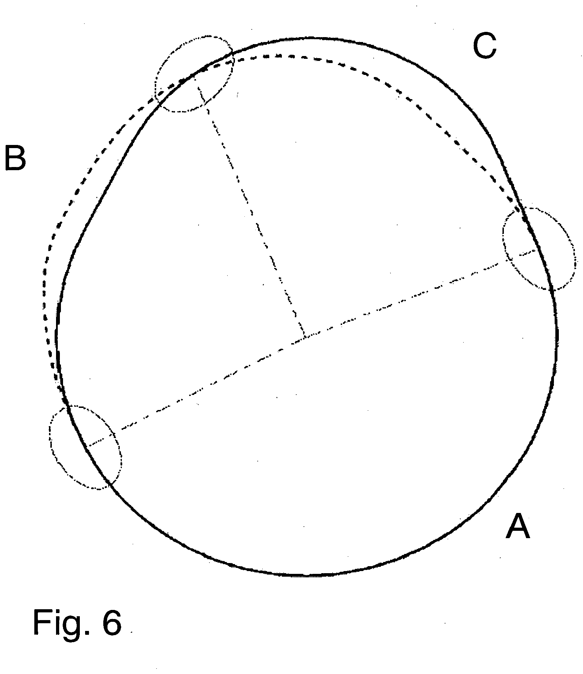

Die Fig. 5 zeigt einen Schnitt durch den Freistich 10 zwischen dem in der Fig. 2 auf der linken Seite befindlichen 1 und dem mittleren Teilnocken 2. Zu sehen ist dabei die Laufflächen-Kontur des hinteren Teilnockens 1 und gestrichelt die Kontur 10" des Freistichs 10. Zur besseren Verdeutlichung des Verlaufs der Kontur des Freistichs zeigt die Fig. 6 schematisch die Abhängigkeit von den beiden benachbarten Teilnocken.

Dargestellt sind die Laufflächen-Konturen der beiden Teilnocken: einmal mit durchgezogener und einmal mit gestrichelter Linie. Zu erkennen ist, dass beide Laufflächen-Konturen im Bereich des sog. Grundkreises (hier zur Verdeutlichung mit A für Sektor A gekennzeichnet) gleich sind. Dies erlaubt im eingebauten Zustand das axiale Verschieben des Nockens. In diesem Sektor A ist die Kontur des Freistichs daher abhängig von beiden Laufflächen-Konturen, da beide den jeweils geringsten Abstand zur Längsachse aufweisen.

Zusätzlich gibt es einen ersten - hier links dargestellten und mit B bezeichneten - Bereich und einen zweiten - hier rechts dargestellten und mit C bezeichneten - Bereich, in denen jeweils eine der zwei Laufflächen-Konturen näher als die andere zur Längsachse angeordnet ist bzw. eine geringere radiale Erstreckung aufweist. Im Sektor B hat die mit der durchgezogenen Linie dargestellte Laufflächen-Kontur den geringeren Abstand zur Längsachse, sodass die Kontur des Freistichs dieser Laufflächen-Kontur folgt. Im Sektor C hat umgekehrt die andere - mit der gestrichelten Linie dargestellte - Laufflächen-Kontur den geringeren Abstand zur Längsachse und die Kontur der Lauffläche orientiert sich in diesem Raumwinkelbereich an dieser Laufflächen-Kontur. Die Kontur des Freistichs besteht daher entsprechend aus drei Sektoren, in denen jeweils der Laufflächen-Kontur mit der geringsten radialen Erstreckung gefolgt wird. Diese Abhängigkeit entsteht dadurch, dass die Laufflächen-Konturen auf die Ebene des Freistichs projiziert und die passende Projektion verwendet wird.

Mit Kreisen gekennzeichnet sind die Bereiche der Änderung der Abhängigkeit der Kontur des Freistichs. In diesen Zonen findet in der dargestellten Ausgestaltung beispielhaft insbesondere ein tangentialer Übergang statt. Daher ist zur Verdeutlichung auch jeweils ein von der Längsachse ausgehender Radius eingezeichnet, zu dem tangential der Übergang vorgenommen wird.

## Patentansprüche

1. Nocken für eine Nockenwelle,
mit mindestens zwei axial entlang einer Längsachse (L) hintereinander angeordneten Teilnocken (1, 2, 3) und
mit einem zwischen den zwei Teilnocken (1, 2, 3) befindlichen Freistich (10, 20), wobei die mindestens zwei Teilnocken (1, 2, 3)jeweils in einer radialen Richtung (R) außen liegende Laufflächen (1', 2', 3') mit variablen Laufflächen-Konturen aufweisen,
wobei die Laufflächen-Konturen einen jeweiligen Verlauf der zugeordneten Lauffläche in radialer Richtung (R) um die Längsachse (L) herum beschreiben,
wobei der Freistich (10, 20) ein Profil (10', 20') mit einer Kontur (10") aufweist, wobei das Profil (10', 20') einen Verlauf des Freistichs (10, 20) entlang der Längsachse (L) beschreibt,
wobei die Kontur (10") einen Verlauf des Profils (10', 20') in radialer Richtung (R) um die Längsachse (L) herum beschreibt, und
wobei die Laufflächen-Konturen der mindestens zwei Teilnocken (1, 2, 3) sich voneinander unterscheiden,
**dadurch gekennzeichnet,**
**dass** die Kontur (10") variabel ist, indem der Freistich (10, 20) unterschiedlich zu einem kreisförmigen Freistich ist,
**dass** die Kontur (10")abhängig von den Laufflächen-Konturen ist, und
**dass** die Kontur (10") jeweils abhängig von derjenigen Laufflächen-Kontur ist, die einen geringeren radialen Abstand zur Längsachse (L) als die andere Laufflächen-Kontur aufweist,
indem die Kontur (10") jeweils derjenigen Projektion der Teilnocken (1, 2, 3) auf die Ebene des Freistichs (10, 20) folgt, welche den geringsten Abstand zur Längsachse (L) aufweist.

2. Nocken nach Anspruch 1,
wobei an Bereichen der Kontur (10"), an welchen ein Wechsel der Abhängigkeit von einer zu einer anderen Laufflächen-Kontur stattfindet, ein tangentialer Übergang vorhanden ist.

3. Nocken nach Anspruch 1 oder 2,
wobei das Profil (10', 20') eine Symmetrieachse aufweist, die senkrecht auf der Kontur (10") steht.

4. Nocken nach einem der Ansprüche 1 bis 3,
wobei die Teilnocken (1, 2, 3) und der Freistich (10) unter Verwendung einer Umformtechnik erzeugt sind.

5. Nocken nach Anspruch 4,
wobei die Teilnocken (1, 2, 3) umformtechnisch erzeugte Verrundungen hin zu ihren jeweiligen Seitenflächen aufweisen.

## Claims

1. Cams for a camshaft,
with at least two partial cams (1, 2, 3) arranged one behind the other axially along a longitudinal axis (L) and
with an undercut (10, 20) located between the two partial cams (1, 2, 3), whereby the at least two partial cams (1, 2, 3), each having running surfaces (1', 2', 3') lying on the outside in a radial direction (R) and having variable running surface contours,
whereby the running surface contours describe a respective course of the associated running surface in radial direction (R) around the longitudinal axis (L), wherein the undercut (10, 20) has a profile (10', 20') with a contour (10"), wherein the profile (10', 20') describes a course of the undercut (10, 20) along the longitudinal axis (L),
whereby the contour (10") describes a course of the profile (10', 20') in the radial direction (R) around the longitudinal axis (L), and
wherein the running surface contours of the at least two partial cams (1, 2, 3) differ from one another,
**Characterized by the fact**
that the contour (10") is variable in that the undercut (10, 20) is different from a circular undercut,
that the contour (10") is dependent on the running surface contours, and that the contour (10") is dependent on that running surface contour which has a smaller radial distance to the longitudinal axis (L) than the other running surface contour,
in that the contour (10") follows that projection of the partial cams (1, 2, 3) onto the plane of the undercut (10, 20), which is at the smallest distance from the longitudinal axis (L).

2. Cams according to claim 1,
where there is a tangential transition to areas of the contour (10") on which there is a change in dependency from one running surface contour to another.

3. Cams according to claim 1 or 2,
radius starting from the longitudinal axis, to which the transition is made tangentially,
whereby the profile (10', 20') has an axis of symmetry that is perpendicular to the contour (10").

4. Cams according to one of claims 1 to 3,
whereby the partial cams (1, 2, 3) and the undercut (10) are produced using a forming technique.

5. Cam according to claim 4, in which the partial cams (1, 2, 3) have roundings produced by forming towards their respective side surfaces.

## Revendications

1. Came pour arbre à cames,
doté d'au moins deux cames partielles (1, 2, 3) disposées axialement l'une derrière l'autre le long d'un axe longitudinal (L), et
d'une rainure de dégagement (10, 20) se trouvant entre les deux cames partielles (1, 2, 3), à savoir que les deux cames partielles (1, 2, 3) au moins, chacune dans une direction radiale (R), présentent des surfaces de roulement (1', 2', 3') situées à l'extérieur dotées de gabarits variables,
à savoir que les gabarits des surfaces de roulement décrivent respectivement le parcours en direction radiale (R) de la surface de roulement à laquelle il se rapporte, autour de l'axe longitudinal (L), à savoir que la rainure de dégagement (10, 20) présente un profil (10', 20') avec gabarit (10"), à savoir que ce profil (10', 20') décrit le parcours de la rainure de dégagement (10, 20) le long de l'axe longitudinal (L),
à savoir que le gabarit (10") décrit un parcours du profil (10', 20') en direction radiale (R) autour de l'axe longitudinal (L), et
à savoir que les gabarits des surfaces de roulement des deux cames partielles (1, 2, 3) au moins sont différentes l'une de l'autre,
**caractérisée en ce que**
le gabarit (10") est variable du fait que la rainure de dégagement (10, 20) est différente d'une rainure de dégagement circulaire,
le gabarit (10") dépend des gabarits des surfaces de roulement, et que le gabarit (10") dépend respectivement du gabarit de la surface de roulement présentant un écart radial avec l'axe longitudinal (L) plus faible que l'autre gabarit de surface de roulement,
le gabarit (10") suit respectivement la projection des cames partielles (1, 2, 3) au niveau de la rainure de dégagement (10, 20) qui présente l'écart le plus faible par rapport à l'axe longitudinal (L).

2. Came selon la revendication n°1,
à savoir qu'une transition tangentielle est présente sur certaines zones du gabarit (10") sur lesquelles a lieu un changement de la dépendance d'un gabarit de surface de roulement pour un autre.

3. Came selon la revendication 1 ou 2,
marquée par le rayon partant de l'axe longitudinal et dont la transition se fait tangentiellement.
À savoir que le profil (10', 20') présente un axe symétrique situé verticalement sur le gabarit (10").

4. Came selon une des revendications 1 à 3,
à savoir que les cames partielles (1, 2, 3) et la rainure de dégagement (10) sont générées grâce à l'utilisation d'une technique de formage.

5. Came selon la revendication 4, à savoir que les cames partielles (1, 2, 3) présentent des arrondis réalisés par formage et orientés vers les surfaces de leurs côtés respectifs.
